# FASCICULE DE BREVET EUROPEEN

(11) **EP 2 431 529 B1**
(45) Date de publication et mention de la délivrance du brevet: **03.05.2017**
(21) Numéro de dépôt: 11358010.4
(22) Date de dépôt: 30.08.2011
(51) Int. Cl.: E01H 1/08, A47L 5/14, A01G 1/12

(54) **Souffleur électroportatif**
Gebläse-Elektrowerkzeug
Portable electric blower

(30) Priorité: 20.09.2010 FR 1003728
(43) Date de publication de la demande: 21.03.2012
(73) Titulaire: Pellenc SA, 84120 Pertuis (FR)
(72) Inventeur: Pellenc, Roger, 84120 Pertuis (FR)
(74) Mandataire: Weber, Etienne Nicolas

(56) Documents cités:
- US-A- 4 945 604
- US-A- 6 105 206

## Description

La présente invention concerne un souffleur électroportatif.

### 1. Domaine de l'invention

L'invention s'applique au domaine des appareils de projection d'air utilisés pour « balayer » les feuilles mortes ou les détritus divers pouvant recouvrir des grandes surfaces telles que, pelouses, voies publiques, parkings extérieurs, etc. Le résultat obtenu par leur action est analogue à celui atteint par l'utilisation d'un balai ou d'un râteau traditionnels. L'invention concerne également le domaine des appareils de projection de produit de traitement, tel que des produits de traitement phytosanitaires.

Ces appareils peuvent être conçus pour un usage professionnel et aussi pour une utilisation domestique.

### 2. Art antérieur

L'usage de ces appareils dénommés « souffleurs » est extrêmement répandu du fait de leur grande simplicité d'utilisation, de la rapidité d'exécution des tâches de nettoyage et de leur efficacité de leur action.

De tels appareils comprennent principalement, un conduit de guidage d'air comportant une partie proximale d'entrée d'air ou tuyère d'aspiration, une partie distale de sortie d'air ou tuyère d'échappement, et un ventilateur axial ou centrifuge disposé à l'intérieur de la partie intermédiaire du conduit. Ce ventilateur assure une aspiration d'air et son refoulement sous forme d'un flux d'air permettant de repousser les feuilles mortes ou détritus divers, de sorte à les rassembler dans un amas qui peut être enlevé facilement. Ce ventilateur peut être entraîné par un moteur thermique ou par un moteur électrique.

Ces appareils peuvent être agencés pour propulser des produits de traitement, tels que des produits de traitement phytosanitaires. Les appareils de ce genre peuvent se présenter sous la forme d'outils portatifs portés à la main ou être accrochés au dos d'un utilisateur au moyen d'un harnais.

Dans le document de brevet US-2008/0127448 est décrit un souffleur équipé d'un ventilateur centrifuge. Selon ce document, la tuyère d'aspiration est recouverte par une grille et le ventilateur centrifuge logé dans une volute est en prise direct avec un moteur thermique. Toutefois, cet appareil est lourd, gros consommateur d'énergie, et son fonctionnement est très bruyant. En particulier, la rotation du ventilateur, le passage de l'air sur les obstacles disposés dans le flux (grille de protection de l'entrée d'air, les supports), etc., génèrent une pollution sonore directe sur l'environnement autour du souffleur et pour l'utilisateur. D'autre part, ces nuisances sonores affectent généralement la santé de l'utilisateur, qui en prévention doit porter des dispositifs de protection auditive, tels que bouchons, casques ou autres.

Les documents de brevet US-4413371 et DE-102007037012 présentent ci-après des souffleurs équipés d'un ventilateur axial.

Dans le brevet US-4413371, le dispositif est composé d'une première unité comprenant un moteur thermique et une seconde unité comportant le système du souffleur, le moteur thermique étant couplé directement au ventilateur axial. Ce dernier est logé à l'extrémité d'une longue tuyère d'échappement présentant une largeur dégressive et une extrémité prolongeant cette sortie d'air de faible épaisseur. Ledit souffleur est muni de deux poignées de manipulation. Cet appareil reste complexe et semble être difficilement manipulable compte tenu du poids du moteur thermique et de sa configuration. En effet, deux poignées de manoeuvre sont nécessaires pour la manipulation et l'extrémité de la tuyère d'échappement doit opérer proche du sol. A cela s'ajoute le faible rendement de la machine malgré l'utilisation d'un ventilateur axial.

Dans le document DE-102007037012 alimenté par un moteur électrique, la partie proximale d'entrée ou tuyère d'aspiration est montée dans l'axe de rotation du ventilateur constitué d'une pluralité d'hélices accouplées les unes aux autres. Cette disposition est supposée améliorer le rendement de tels appareils et réduire le bruit. Cependant le bruit reste anormalement élevé et le rendement toujours aussi médiocre.

Dans le document US-4.945.604 est décrit un souffleur comportant un ventilateur axial accouplé à un moteur électrique logé axialement dans une portion intermédiaire d'une tuyère rectiligne, afin de réduire les bruits de fonctionnement de l'appareil.

En résumé, les différents documents représentatifs de l'art antérieur, ont en commun comme inconvénients, une importante consommation d'énergie, un faible rendement et une importante nuisance sonore.

### 3. Objectifs de l'invention

L'invention a notamment pour but de remédier aux inconvénients de l'art antérieur, en particulier aux désavantages des dispositifs décrits dans les documents susmentionnés ou d'atténuer grandement les effets nuisibles de certains de ces inconvénients.

L'objectif de l'invention est de réduire significativement le bruit du souffleur et, simultanément, d'optimiser son rendement.

Un autre objectif de l'invention est de proposer un souffleur simple, peu coûteux, faible consommateur d'énergie, respectant l'environnement, et présentant un caractère esthétique.

### 4. Résumé de l'invention

Selon l'invention, ces objectifs sont atteints grâce à un souffleur électroportatif du genre comprenant un conduit de guidage d'air comportant une partie proximale ou tuyère d'aspiration munie d'une entrée d'air, une partie distale de sortie d'air ou tuyère d'échappement et un ventilateur. L'invention est remarquable en ce que ledit ventilateur est un ventilateur axial, et en ce que ladite tuyère d'aspiration présente en amont du ventilateur axial, un coude dont l'extrémité proximale délimitant l'entrée d'air est orientée vers le bas, en considérant une position de travail de l'appareil selon laquelle, la poignée de manoeuvre dudit appareil est placée au dessus de celui-ci.

Ainsi, la tuyère d'aspiration orientée vers le bas dirige le bruit vers le bas et l'éloigne des oreilles de l'utilisateur tout en l'atténuant.

Selon une disposition avantageuse, le coude de la tuyère d'aspiration forme un angle compris entre 60° et 120°, par rapport à l'axe du ventilateur axial.

Selon une autre disposition caractéristique de l'invention, le souffleur est agencé pour constituer un atomiseur de produit de traitement, par exemple, des produits de traitement phytosanitaires, une entrée de produit de traitement étant prévue dans le conduit de guidage, en aval, et, par exemple, à proximité du ventilateur axial, cette entrée de produit de traitement étant apte à être reliée à un réservoir de produit de traitement.

Selon une autre disposition caractéristique avantageuse, la portion de la tuyère d'aspiration comprise entre l'extrémité proximale d'entrée d'air et la partie intermédiaire de ladite tuyère d'aspiration logeant le ventilateur axial présente une section dégressive ou forme convergente en direction du ventilateur axial.

Cette configuration permet d'optimiser l'écoulement du flux d'air à l'entrée du ventilateur axial.

Selon une autre disposition caractéristique de l'invention, l'extrémité proximale délimitant l'entrée d'air présente une section dont la dimension dans l'axe principal est inférieure à la dimension dans l'axe perpendiculaire à l'axe principal.

De manière préférée, l'extrémité proximale délimitant l'entrée d'air présente une section ellipsoïdale ou sensiblement ellipsoïdale, oblongue ou sensiblement oblongue, dont le petit axe est orienté dans l'axe principal du souffleur.

Cette section sensiblement en forme d'ellipse permet d'améliorer la compacité de l'appareil pour un faible encombrement, et en même temps, sa maniabilité.

Selon une autre disposition caractéristique, la paroi interne de la tuyère d'aspiration, disposée en amont du ventilateur axial présente une surface unie dépourvue d'aspérités.

De cette manière, il n'y a aucune perturbation de la circulation de l'air le long de la tuyère d'aspiration, ce qui favorise une atténuation du bruit.

De préférence, la section de l'extrémité d'entrée d'air de la tuyère d'aspiration est de deux à quatre fois supérieure à la section que présente ladite tuyère d'aspiration, dans sa partie disposée en amont et à proximité du ventilateur axial.

De manière avantageuse, l'entrée d'air constituée par l'extrémité proximale de la tuyère d'aspiration est délimitée par un bord ou collerette de section progressivement arrondie, et dont le bord interne est tangent à la surface interne du coude.

Cette collerette permet de réduire très nettement les pertes de charge d'air et d'améliorer ainsi le rendement aérodynamique.

Avantageusement, la tuyère d'aspiration est constituée par l'assemblage de deux parties symétriques intégrant des fonctions de fixation de la grille d'entrée, et permettant d'autre part, d'être facilement réalisable, par injection de matière plastique par exemple.

Selon l'invention, le souffleur comprend des pieds intégrés à la collerette.

Préférentiellement, le souffleur est alimenté par une batterie insérée dans celui-ci ou portée à la ceinture ou dans le dos.

### 5. Brève description des dessins

Les buts, caractéristiques et avantages ci-dessus, et d'autres encore, ressortiront mieux de la description qui suit et des dessins annexés, dans lesquels :

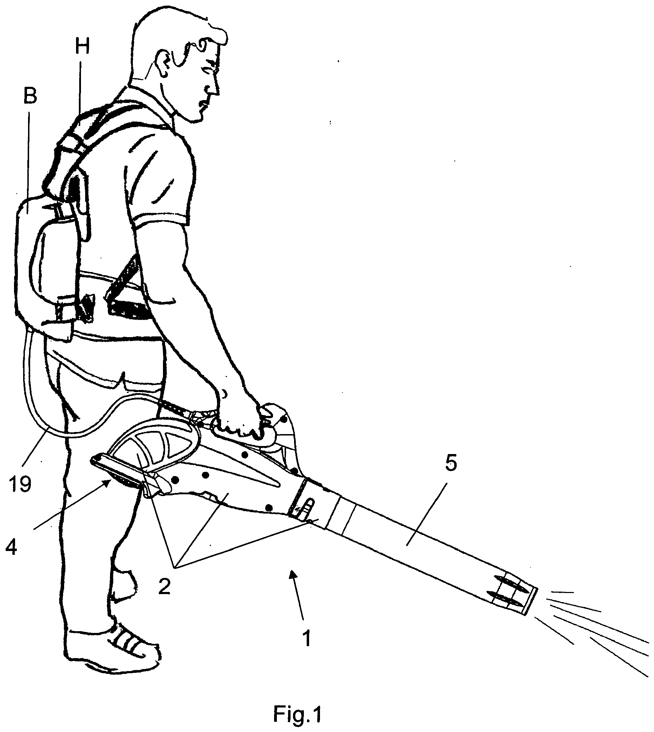

La figure 1 illustre une vue dans laquelle le souffleur est porté par un utilisateur, ledit souffleur est alimenté par une batterie portée dans le dos via un cordon électrique.
La figure 2 est une vue en perspective du souffleur.
La figure 3 est une vue de côté du souffleur.
La figure 4 est une vue en coupe axiale du souffleur selon la figure 3.
La figure 5 est une vue de détails de la partie proximale, en coupe axiale et en perspective du souffleur selon la figure 4.
La figure 6 est une vue de dessous du souffleur illustrant l'entrée d'air.

### 6. Description d'un mode de réalisation de l'invention

On se réfère auxdits dessins pour décrire des exemples intéressants, quoique nullement limitatifs, de modes de réalisation du souffleur selon l'invention.

Dans la description qui suit et dans les revendications les mots « haut » et « bas » sont utilisés en référence avec la position du souffleur en cours de travail. Ces termes n'ont par conséquent aucun caractère limitatif.

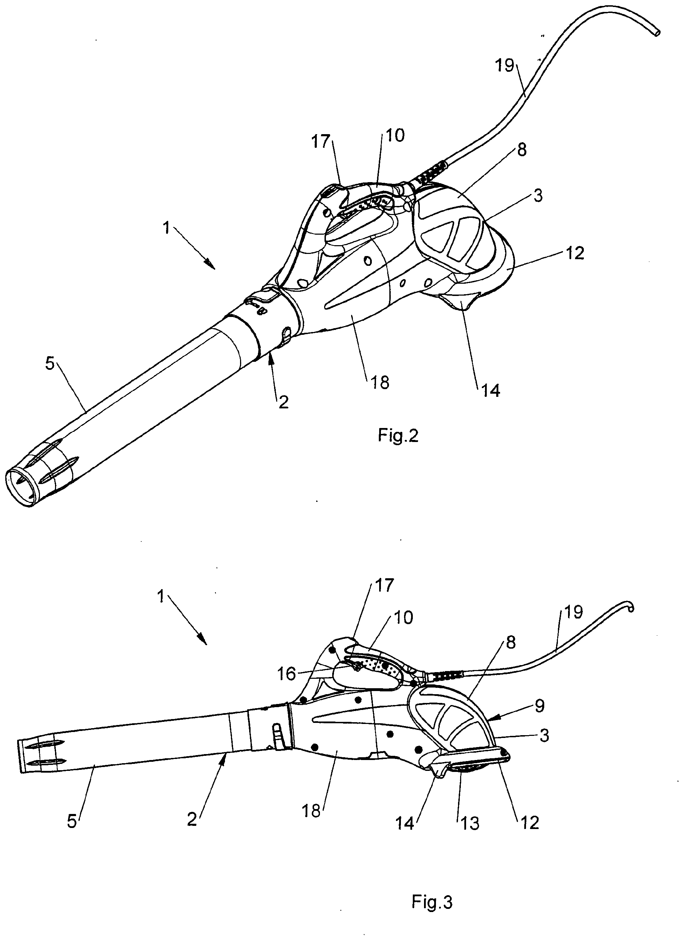

Le souffleur 1, représenté sur la figure 2, comprend principalement un conduit de guidage d'air 2 comportant une partie proximale ou tuyère d'aspiration 3 munie d'une entrée d'air 4, une partie distale de sortie d'air ou tuyère d'échappement 5 et un ventilateur 6.

Selon l'invention, le ventilateur 6 est logé dans la partie intermédiaire 7 du conduit de guidage d'air 2 et plus précisément, dans la tuyère d'aspiration 3 et il est du type axial.

Par ailleurs, le souffleur 1 est alimenté par un moteur électrique 15 monté en prise direct avec le ventilateur axial 6.

La tuyère d'aspiration 3 présente, en amont du ventilateur axial 6, un coude 8 dont l'extrémité proximale délimitant l'entrée d'air 4 est dirigé vers le bas, en considérant une position de travail de l'appareil selon laquelle, la poignée de manoeuvre 10 dudit appareil est placée au-dessus de celui-ci et orientée vers le haut.

Le ventilateur axial 6 se trouve disposé dans le prolongement de l'axe de l'entrée d'air 4, en aval du coude 8, et perturbe le moins possible le rendement du souffleur 1.

La poignée de manoeuvre 10 permet de tenir à la main ledit souffleur 1 et d'orienter le conduit de guidage 2 vers la zone destinée à être nettoyée. Cette poignée 10 est également munie d'un interrupteur 16 et des moyens de réglage 17 de la puissance du moteur 15.

Selon l'invention, le coude 8 forme un angle compris entre 60° et 120° par rapport à l'axe du ventilateur axial 6. De manière préférée, le coude 8 peut présenter un angle avoisinant les 90°.

Le souffleur 1 peut être aussi agencé pour constituer un atomiseur de produit de traitement, par exemple, des produits de traitement phytosanitaires. Il comprend à cet effet, une entrée 20 de produit de traitement prévue dans le conduit de guidage 2, plus précisément, en aval, et, par exemple, à proximité du ventilateur axial 6. Cette entrée 20 de produits de traitement est apte à être reliée à un réservoir (non représenté) de produit de traitement. Dans ce cas, et dans une position de fonctionnement, la tuyère d'échappement 5 peut être dirigée vers le haut de sorte à asperger les feuilles des plantes devant être traitées, l'entrée d'air 4 se trouvant toujours orientée en direction du bas.

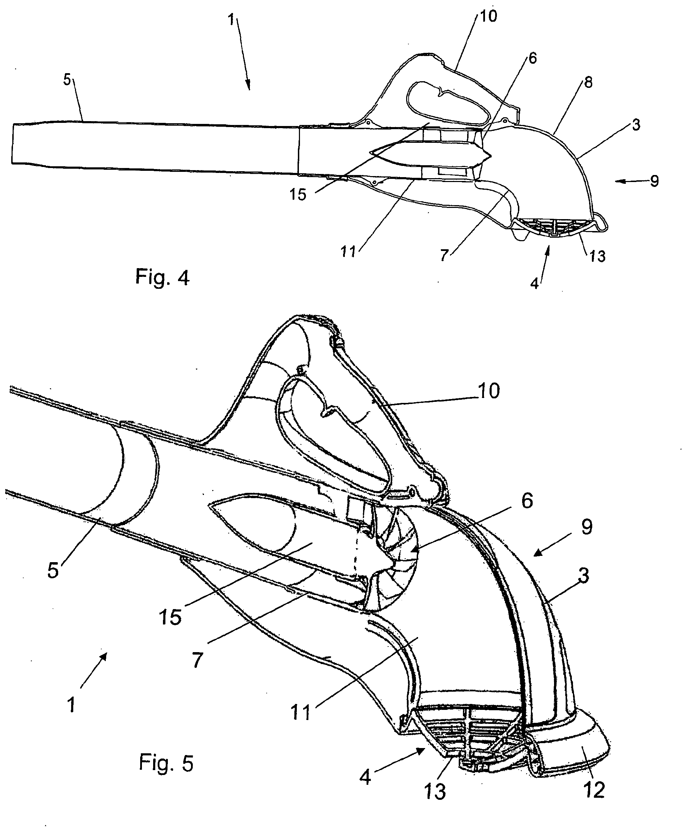

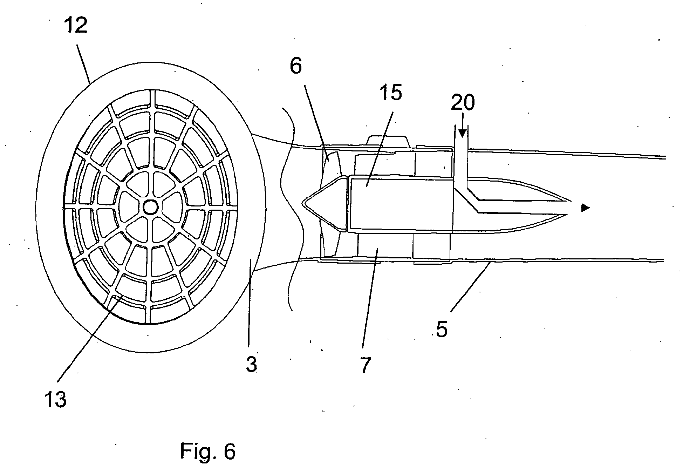

Comme on peut le voir sur les figures 4, 5 et 6, la portion 9 de la tuyère d'aspiration 3 comprise entre l'extrémité proximale d'entrée d'air 4 et la partie intermédiaire 7 de la tuyère d'aspiration 3 où se trouve logé le ventilateur axial 6, présente une section dégressive ou forme convergente en direction du ventilateur axial 6. Cette disposition est destinée à favoriser l'écoulement du flux d'air ambiant aspiré par l'entrée d'air 4.

De plus, l'extrémité proximale délimitant l'entrée d'air 4 présente une section dont la dimension dans l'axe principal est inférieure à la dimension dans l'axe perpendiculaire à l'axe principal.

La portion 9 comprise entre l'extrémité proximale d'entrée d'air 4 et la partie intermédiaire 7 de la tuyère d'aspiration 3 présente, en outre, une section ellipsoïdale ou sensiblement ellipsoïdale. Plus précisément, l'extrémité proximale délimitant l'entrée d'air 4 présente une section ellipsoïdale ou sensiblement ellipsoïdale, oblongue ou sensiblement oblongue et dont le petit axe est orienté dans l'axe principal du souffleur 1.

Selon l'invention, la paroi interne 11 de la tuyère d'aspiration 3 disposée en amont du ventilateur axial 6 présente une surface unie dépourvue d'aspérités. Cette caractéristique évite des perturbations du flux d'air aspiré lors de son passage dans la tuyère d'aspiration 3 du conduit de guidage 2, ce qui favorise une atténuation du bruit généré par cette aspiration.

La figure 5, représente l'extrémité d'entrée d'air 4 de la tuyère d'aspiration 3 qui est deux à quatre fois supérieure à la section que présente la tuyère d'aspiration 3 dans sa partie disposée en amont et à proximité du ventilateur axial 6.

Cette entrée d'air 4 de la tuyère d'aspiration 3 est délimitée par un bord ou collerette 12 présentant une section progressivement arrondie, et dont le bord interne est tangent à la surface interne du coude 8, de sorte à améliorer l'aérodynamisme de l'appareil et à contribuer à l'atténuation du bruit.

Cette collerette 12 comporte des pieds 14 disposés de part et d'autre de celle-ci pour poser le souffleur sur le sol ou autres surfaces d'appui.

Par ailleurs, l'entrée d'air 4 est recouverte par une grille 13 comportant des moyens de fixation destinés à s'intégrer à l'extrémité de la tuyère d'aspiration 3. Cette grille 13 présente en outre, une forme bombée, venant épouser parfaitement l'extrémité de la tuyère d'aspiration 3. Elle pourrait, bien entendu, présenter une forme plane.

La tuyère d'aspiration 3 peut résulter d'un procédé constitué par l'assemblage de deux parties symétriques fixées entre elles par tous moyens appropriés, par exemple, par des moyens de fixation, du type vis-écrou.

De manière préférentielle, ces deux parties peuvent être montées à demeure.

Avantageusement, ces parties symétriques intègrent des fonctions de fixation de la grille d'entrée.

Ce procédé facilite grandement l'installation du ventilateur axial 6 et de son moteur d'entrainement 15, ainsi que la mise en place de la grille d'entrée d'air 4.

Le conduit de guidage 2 du souffleur 1, peut être constitué d'un assemblage démontable d'au moins deux parties amovibles, à savoir, la tuyère d'aspiration 3 et la tuyère d'échappement 5 monté dans le prolongement de la tuyère d'aspiration 3, dans la conformation d'utilisation dudit souffleur 1.

Le conduit de guidage 2, et les différentes parties constituant le coude 8 peuvent être réalisables par injection de plastique.

Le souffleur 1 présente également un carter 18 de forme aérodynamique qui recouvre et épouse les formes d'une portion du conduit de guidage 2. Il peut être constitué de plusieurs parties amovibles. Il porte notamment la poignée de manoeuvre 10 qui comme indiqué précédemment permet de manipuler et de diriger le souffleur 1 lors de son utilisation.

On précise cependant que, selon un autre mode de réalisation, le souffleur 1, pourrait être équipé d'un anneau ou autre organe d'accrochage permettant de le suspendre à un harnais H porté par l'utilisateur.

D'autre part, le moteur électrique 15 peut être alimenté soit par une batterie B insérée dans le souffleur, soit par l'intermédiaire d'un câble électrique 19 équipé d'un moyen de connexion à une source de courant (prise de courant du secteur ou batterie portée à la ceinture ou dans le dos).

## Revendications

1. Souffleur (1) électroportatif comprenant un conduit de guidage d'air (2) comportant une partie proximale ou tuyère d'aspiration (3) munie d'une entrée d'air (4), une partie distale de sortie d'air ou tuyère d'échappement (5) et un ventilateur axial (6) logé dans le conduit de guidage d'air, **caractérisé en ce que** ladite tuyère d'aspiration (3) présente, en amont du ventilateur axial (6), un coude (8) dont l'extrémité proximale délimitant l'entrée d'air (4) est orientée vers le bas, en considérant une position de travail du souffleur selon laquelle, la poignée de manoeuvre (10) du souffleur est placée au-dessus de celui-ci.

2. Souffleur (1) électroportatif selon la revendication 1, **caractérisé en ce qu'**il est agencé pour constituer un atomiseur de produit de traitement, par exemple, des produits de traitement phytosanitaires, une entrée (20) de produit de traitement étant prévue dans le conduit de guidage (2), en aval du ventilateur axial (6), cette entrée (20) de produit de traitement étant apte à être reliée à un réservoir de produit de traitement.

3. Souffleur (1) électroportatif selon la revendication 1 ou 2, **caractérisé en ce que** le coude (8) de la tuyère d'aspiration (3) forme un angle compris entre 60° et 120°, par rapport à l'axe du ventilateur axial (6).

4. Souffleur (1) électroportatif selon la revendication 3, **caractérisé en ce que** le coude (8) de la tuyère d'aspiration (3) forme un angle de l'ordre de 90° par rapport à l'axe du ventilateur axial (6).

5. Souffleur (1) électroportatif selon l'une des revendications 1 à 4, **caractérisé en ce que** la portion (9) de la tuyère d'aspiration (3) comprise entre l'extrémité proximale d'entrée d'air (4) et la partie intermédiaire (7) de ladite tuyère d'aspiration (3) logeant le ventilateur axial (6), présente une section dégressive ou forme convergente en direction du ventilateur axial (6).

6. Souffleur (1) électroportatif selon l'une quelconque des revendications 1 à 5, **caractérisé en ce que** l'extrémité proximale délimitant l'entrée d'air (4) présente une section dont la dimension dans l'axe principal est inférieure à la dimension dans l'axe perpendiculaire à l'axe principal.

7. Souffleur (1) électroportatif selon l'une quelconque des revendications 1 à 6, **caractérisé en ce que** l'extrémité proximale délimitant l'entrée d'air (4) présente une section ellipsoïdale ou sensiblement ellipsoïdale, oblongue ou sensiblement oblongue, dont le petit axe est orienté dans l'axe principal du souffleur.

8. Souffleur (1) électroportatif selon l'une quelconque des revendications 1 à 7, **caractérisé en ce que** la paroi interne (11) de la tuyère d'aspiration (3) disposée en amont du ventilateur axial (6) présente une surface unie dépourvue d'aspérités.

9. Souffleur (1) électroportatif selon l'une quelconque des revendications 1 à 8, **caractérisé en ce que** la section de l'extrémité d'entrée d'air (4) de la tuyère d'aspiration (3) est de deux à quatre fois supérieure à la section que présente ladite tuyère d'aspiration (3) dans sa partie disposée en amont et à proximité du ventilateur axial (6).

10. Souffleur (1) électroportatif selon l'une quelconque des revendications 1 à 9, **caractérisé en ce que** l'entrée d'air (4) constituée par l'extrémité proximale de la tuyère d'aspiration (3), est délimitée par un bord ou collerette (12) de section progressivement arrondie, et dont le bord interne est tangent à la surface interne du coude (8).

11. Souffleur (1) électroportatif selon l'une quelconque des revendications 1 à 10, **caractérisé en ce que** la tuyère d'aspiration (3) est constituée par l'assemblage de deux parties symétriques intégrant des fonctions de fixation de la grille d'entrée.

12. Souffleur (1) électroportatif selon la revendication 10 ou 11, **caractérisé en ce que** des pieds (14) sont intégrés à la collerette (12).

13. Souffleur (1) électroportatif selon l'une quelconque des revendications 1 à 12, **caractérisé en ce qu'**il est alimenté par soit par une batterie (B) insérée dans le souffleur (1), soit par l'intermédiaire d'un câble électrique (19) équipé d'un moyen de connexion à une source de courant, telle que prise de courant du secteur ou batterie (B) portée à la ceinture ou dans le dos de l'usager.

## Patentansprüche

1. Gebläse-Elektrowerkzeug (1), umfassend einen Luftführungskanal (2), der einen proximalen Abschnitt oder eine Saugdüse (3) enthält, die mit einem Lufteingang (4), einem distalen Luftausgangsabschnitt oder einer Schubdüse (5) und einem axialen Ventilator (6) versehen ist, der in dem Luftführungskanal angeordnet ist, **dadurch gekennzeichnet, dass** die Saugdüse (3) stromaufwärts von dem axialen Ventilator (6) eine Biegung (8) aufweist, deren proximales Ende, das den Lufteingang (4) begrenzt, nach unten ausgerichtet ist, unter Berücksichtigung einer Arbeitsstellung des Gebläses gemäß der der Betätigungsgriff (10) des Gebläse über diesem platziert ist.

2. Gebläse-Elektrowerkzeug (1) nach Anspruch 1, **dadurch gekennzeichnet, dass** es angeordnet ist, um einen Behandlungsmittelzerstäuber, beispielsweise Pflanzenschutzbehandlungsmittel, zu bilden, wobei ein Behandlungsmitteleingang (20) in dem Führungskanal (2) stromabwärts von dem axialen Ventilator (6) vorgesehen ist, wobei dieser Behandlungsmitteleingang (20) mit einem Behandlungsmittelbehälter verbunden werden kann.

3. Gebläse-Elektrowerkzeug (1) nach Anspruch 1 oder 2, **dadurch gekennzeichnet, dass** die Biegung (8) der Saugdüse (3) einen Winkel zwischen 60° und 120° im Verhältnis zu der Achse des axialen Ventilators (6) bildet.

4. Gebläse-Elektrowerkzeug (1) nach Anspruch 3, **dadurch gekennzeichnet, dass** die Biegung (8) der Saugdüse (3) einen Winkel in der Größenordnung von 90° im Verhältnis zu der Achse des axialen Ventilators (6) bildet.

5. Gebläse-Elektrowerkzeug (1) nach einem der Ansprüche 1 bis 4, **dadurch gekennzeichnet, dass** der Abschnitt (9) der Saugdüse (3), die zwischen dem proximalen Lufteinlassende (4) und dem Zwischenteil (7) der Saugdüse (3) liegt, der den axialen Ventilator (6) aufnimmt, einen abnehmenden Abschnitt oder eine konvergente Form in Richtung des axialen Ventilators (6) aufweist.

6. Gebläse-Elektrowerkzeug (1) nach einem der Ansprüche 1 bis 5, **dadurch gekennzeichnet, dass** das proximale Ende, das den Lufteingang (4) begrenzt, einen Abschnitt aufweist, dessen Abmessung in der Hauptachse geringer ist als die Abmessung in der Achse, die senkrecht zu der Hauptachse ist.

7. Gebläse-Elektrowerkzeug (1) nach einem der Ansprüche 1 bis 6, **dadurch gekennzeichnet, dass** das proximale Ende, das den Lufteingang (4) begrenzt, einen ellipsenförmigen oder im Wesentlichen ellipsenförmigen, länglichen oder im Wesentlichen länglichen Abschnitt aufweist, dessen Nebenachse in der Hauptachse des Gebläses ausgerichtet ist.

8. Gebläse-Elektrowerkzeug (1) nach einem der Ansprüche 1 bis 7, **dadurch gekennzeichnet, dass** die Innenwand (11) der Saugdüse (3), die stromaufwärts von dem axialen Ventilator (6) angeordnet ist, eine einheitliche Oberfläche aufweist, die frei von Unebenheiten ist.

9. Gebläse-Elektrowerkzeug (1) nach einem der Ansprüche 1 bis 8, **dadurch gekennzeichnet, dass** der Endabschnitt des Lufteingangs (4) der Saugdüse (3) zwei bis vier Mal größer ist als der Abschnitt, den die Saugdüse (3) in seinem Teil aufweist, der stromaufwärts und in der Nähe des axialen Ventilators (6) angeordnet ist.

10. Gebläse-Elektrowerkzeug (1) nach einem der Ansprüche 1 bis 9, **dadurch gekennzeichnet, dass** der Lufteingang (4), der durch das proximale Ende der Saugdüse (3) gebildet ist, durch einen Rand oder Kragen (12) des progressiv abgerundeten Abschnitts begrenzt ist und dessen Innenkante zu der Innenfläche der Biegung (8) tangential ist.

11. Gebläse-Elektrowerkzeug (1) nach einem der Ansprüche 1 bis 10, **dadurch gekennzeichnet, dass** die Saugdüse (3) aus der Anordnung von zwei symmetrischen Teilen besteht, die Befestigungsfunktionen des Eintrittsgitters integriert.

12. Gebläse-Elektrowerkzeug (1) nach Anspruch 10 oder 11, **dadurch gekennzeichnet, dass** Füße (14) in den Kragen (12) integriert sind.

13. Gebläse-Elektrowerkzeug (1) nach einem der Ansprüche 1 bis 12, **dadurch gekennzeichnet, dass** es entweder durch eine Batterie (B), die in das Gebläse (1) eingeführt ist, oder mit Hilfe eines elektrischen Kabels (19) gespeist wird, das mit einem Verbindungsmittel zu einer Stromquelle, wie eine Steckdose des Sektors oder Batterie (B), ausgestattet ist, die im Gürtel oder auf dem Rücken des Benutzers getragen wird.

## Claims

1. Portable electric blower (1) comprising an air-guiding duct (2) which has a proximal part or suction nozzle (3) provided with an air inlet (4), a distal part forming an air outlet or exhaust nozzle (5) and an axial fan (6) housed in the air-guiding duct, **characterised in that** said suction nozzle (3) has, upstream of the axial fan (6), an elbow (8) whose proximal end, delimiting the air inlet (4), is pointed downwards, taking into consideration a working position of the blower, according to which the operating handle (10) of the blower is placed above it.

2. Portable electric blower (1) according to claim 1, **characterised in that** it is arranged to act as a spray for treatment products, for example, plant health care treatment products, wherein an inlet (20) for a treatment product is provided in the air-guiding duct (2) downstream from the axial fan (6), wherein this inlet (20) for a treatment product can be connected to a treatment product container.

3. Portable electric blower (1) according to claim 1 or 2, **characterised in that** the elbow (8) in the suction nozzle (3) forms an angle of between 60° and 120° in relation to the axis of the axial fan (6).

4. Portable electric blower (1) according to claim 3, **characterised in that** the elbow (8) in the suction nozzle (3) forms an angle in the order of 90° relative to the axis of the axial fan (6).

5. Portable electric blower (1) according to any one of claims 1 to 4, **characterised in that** the part (9) of the suction nozzle (3) between the proximal end of the air inlet (4) and the intermediate part (7) of said suction nozzle (3) housing the axial fan (6) has a tapering section or convergent shape towards the axial fan (6).

6. Portable electric blower (1) according to any one of claims 1 to 5, **characterised in that** the proximal end delimiting the air inlet (4) has a cross section, the size of which in the major axis is smaller than the size in the axis perpendicular to the major axis.

7. Portable electric blower (1) according to any one of claims 1 to 6, **characterised in that** the proximal end delimiting the air inlet (4) has a cross section that is ellipsoidal or essentially ellipsoidal, oblong or essentially oblong, and whose minor axis is orientated in the major axis of the blower.

8. Portable electric blower (1) according to any one of claims 1 to 7, **characterised in that**, arranged upstream of the axial fan (6), the internal wall (11) of the suction nozzle (3) has a smooth surface free of any rough areas.

9. Portable electric blower (1) according to any one of claims 1 to 8, **characterised in that** the cross section at the end of the air inlet (4) of the suction nozzle (3) is from two to four times larger than the cross section which the said suction nozzle (3) displays in its part arranged upstream of and close to the axial fan (6).

10. Portable electric blower (1) according to any one of claims 1 to 9, **characterised in that** the air inlet (4) formed by the proximal end of the suction nozzle (3), is delimited by a rim or flange (12) with a gradually flared cross section, and whose internal rim is tangential to the internal surface of the elbow (8).

11. Portable electric blower (1) according to any one of claims 1 to 10, **characterised in that** the suction nozzle (3) is formed by the assembly of two symmetrical parts incorporating the fastening functions of the inlet grill.

12. Portable electric blower (1) according to claim 10 or 11, **characterised in that** feet (14) are incorporated into the flange (12).

13. Portable electric blower (1) according to any one of claims 1 to 12, **characterised in that** power is supplied either by a battery (B) inserted into the blower (1), or by means of an electric cable (19) fitted with a means of connection to a power source, such as a mains outlet or by means of a battery (B) carried on the belt or on the back of the user.
